(19) Europäisches Patentamt European Patent Office Office européen des brevets

(11) **EP 3 594 771 B1**

(12) **EUROPEAN PATENT SPECIFICATION**

(45) Date of publication and mention of the grant of the patent:
**13.10.2021 Bulletin 2021/41**

(21) Application number: **19184463.8**

(22) Date of filing: **04.07.2019**

(51) Int Cl.:
*G05D 22/02* *(2006.01)*     *F26B 3/06* *(2006.01)*
*F26B 21/06* *(2006.01)*     *F26B 25/22* *(2006.01)*
*B29B 13/06* *(2006.01)*     *B29B 9/06* *(2006.01)*
*F26B 9/06* *(2006.01)*

(54) **DEW POINT MEASURE SYSTEM FOR PROCESS FLOW**

TAUPUNKTMESSSYSTEM FÜR EINEN PROZESSFLUSS

SYSTÈME DE MESURE DU POINT DE ROSÉE POUR UN FLUX DE TRAITEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.07.2018  IT 201800006979**

(43) Date of publication of application:
**15.01.2020  Bulletin 2020/03**

(73) Proprietor: **Marzaro, Francesco**
**30036 Santa Maria di Sala (IT)**

(72) Inventor: **Marzaro, Francesco**
**30036 Santa Maria di Sala (IT)**

(74) Representative: **Vinci, Marcello**
**Ufficio Veneto Brevetti**
**Via Sorio 116**
**35141 Padova (IT)**

(56) References cited:
**EP-A2- 1 650 517     CN-U- 203 745 404**
**US-A- 5 896 675**

**Description**

<u>Application field</u>

Object of the present invention is a method with the relative system for the dew point measure of a process fluid and in particular of the fluid utilized in the dehumidification process of plastic materials.

In particular the invention object of this patent application can be used in the field of plants and machineries for the dehumidification of plastic materials, for the following fusion and moulding into specific transforming machines.

In particular the invention object of this patent application concerns a system which measures the dew point of a fluid used, indicatively but not exclusively, for the dehumidification of plastic materials.

The proposed system is thus appliable to those processes that use fluids with low Dew Point values, indicatively but not exclusively, with D.P. < - 30°C, and in particular to the processes and systems for plastic materials dehumidification.

<u>State of the art</u>

It's a fact that the plastic material, in granules or chips is transformed in finished or semifinished products through heating, fusion, injection moulding or extrusion. It's a fact that plastic materials, being hygroscopic, contains water molecules; during fusion processes the water molecules can compromise the plastic's material polymeric structure provoking surface or structural defects in the finished or semifinished products, thus compromising the product quality.

Thus to avoid bubbles and voids developing inside the plastic material and even modifications in its chemical structure, the humidity control and so the dehumidification of the bulk material, become necessary and fundamental in the plastic material transforming process.

The humidity extraction from plastic materials is actually obtained with various desiccant fluids.

In the established dehumidification technology, a defined amount of plastic material is introduced into a dedicated hopper where it is treated by the desiccant fluid, called process fluid, that removes the humidity contained in the material.

The process fluid, typically air or air/nitrogen mixture, is handled by specific generators typically called "dryer". Once the process fluid is introduced into the hopper containing the plastic material it flows through the bulk material removing the humidity contained in it. Each material has a specific and recommended residual humidity level that must be achieved before entering the transforming machine and this level is related to numerous factors such as for example : hopper residence time, process fluid flow, temperature and dew point.

To modify the bulk material residual humidity level achieved after the dehumidification process, it's common practice to adjust both hopper residence time and process fluid parameters such as flow, temperature and Dew Point. An example of dehumidification plant is provided by the patent application US 5 896 675 A.

It's noted that the dew point is that thermodynamic condition when, at a specific pressure and temperature, a fluid/vapor blend becomes saturated in water vapor.

Therefore, with dew point temperature, hereinafter indicated with DP, it's intended the temperature at which, at a high pressure, the saturation of water vapor of the fluid, in particular of the process fluid occurs. It follows that the DP of the process flow used for plastic material dehumidification is a parameter of great importance in the process management. An example of dew-point measurement system is provided by the utility model CN 203 745 404 U.

As an example it follows a summary of the main parameters involved in a typical PET drying process.

Usually, in the plastic material drying processes, it's used a process drying flow (air / nitrogen blend etc.) with a DP indicatively included between : -80°C < DP < -30°C.

In the following *Table 1* are reported, as an example, the typical parameter's values found of a known process.

*Table 1*

| | |
|---|---|
| Delivery pressure Pm (dryer outlet) | 1.2 bar > Pm > 1.05 bar |
| Return pressure Pr (dryer inlet) | 1.0 bar > Pr > 0.9 bar |
| Desiccant bed temperature Td (dryer) | 40°C < Td < 70°C |
| Process flow delivery temperature Tm | 80°C < Tm < 200°C. |

Inside the dryer, there are specific desiccant beds containing adsorbent material that has the capacity to fix the humidity contained in the process flow.

In general, the process flow coming from the dryer is delivered through a pipe to a heater and then into specific hoppers where it flows through the bulk material thus extracting the humidity. Then, through the return pipe, the process flow enriched with the humidity extracted from the plastic material is driven back to the dryer where it releases the humidity into the desiccant beds.

The process flow is then pumped again in the circuit until the plastic material reaches the temperature and humidity conditions required by the transformation process. For the above listed reasons, the optimal condition in the dehumidification processes is generally reached when the process flow has a DP < -30°C.

In the established technique the DP is measured with specific probes, called dew point sensors.

The dew point measure is usually done on a sample flow Qm drawn off from the process flow with a measure circuit either opened to the ambient or closed to the dryer.

Generally, the dew point sensors measure the Qm flow dew point at a pressure Pm similar to the pressure of process flow Q, measured in the draw off point. (P≈1 bar).

At these pressure values (P ≈ 1 bar), the dew point sensors must measure very low $H_2O$ % (1 ÷ 40 ppm indicatively), often giving results with high uncertainty and low affordability.

Notoriously, the dew point sensors are dedicated instruments that use probes (metal oxides, capacitive polymers, nanostructures etc.) able to modify their voltage/current output even with small $H_2O$ % variations perceived.

In *Table 2* typical dew point sensors operating values of Pressure, Flow and Temperature are reported.

*Table 2*

| Measure pressure Pm | 1.0 bar < P < 1.2 bar |
|---|---|
| Sample flow Qm | 1 l/min < Qm < 5 l/min |
| DP Sample flow | -30°C > DP > -80°C |
| Ta ambient temperature | 40°C < Ta < 50°C |

In *Table 3,* are reported the correlations between amount of H2O and Dew Point values at a pressure of 1 bar.

*Table 3*

| DP (°C) | $H_2O$ (ppm) |
|---|---|
| -80° | 0.526 |
| -70° | 2.55 |
| -60°C | 10.6 |
| -50°C | 38.8 |
| -40°C | 127 |
| -30°C | 376 |

In *Table 3* it can be seen that the amount of $H_2O$ in a flow having DP =-80°C is < 1/200 of that found in a flow having DP=-40°C. Generally the dew point sensors has some problems, reported below, that affect the measure reliability.

Temperature sensibility

The dew point sensors are generally calibrated for a flow temperature Tf: 20°C < Tf < 50°C.

As a consequence working at Tf > 50°C generally reduces the measure precision.

Flow variations sensibility

As previous described, the dew point sensors generally work on a sample flow Qm drawn off from the process flow.

Generally a flow Qm >> 5 l/min speeds up the sensor aging while Qm < 1 l/min increase the measure uncertainty.

In the consolidated technique , the sample flow Qm is obtained using the pressure difference ΔP existing between inlet and outlet of the sample circuit.

This ΔP isn't constant but variable in function of various parameters like : Process flow (Q), material level into the hopper, filter and coolers clogging, etc.

So the sample flow Qm generally varies a lot between Qm ≈ 0 a Qm >> 5 l/min.

Measure uncertainty with process flow Dew Point ≤ -50°C / -60°C

As previous reported for example, with Dew Point = -70°C the probe must detect about 2.6 ppm of $H_2O$ in the process flow, often with working temperatures less than ideal.

As a consequence, it's not recommended to use only the Dew Point sensor to control the whole dehumidification process.

Tendency to overestimate with time the Dew Point values

The dew point sensors are naturally subject to aging, due to oxidation phenomena, powder deposits, saturation etc., that reduce the probe sensibility to $H_2O$, in such a way it detects less $H_2O$ % than the real amount.

As a consequence, the dew point sensor tends to overestimate the dryer dehumidification capacity with time while, on the opposite, the drying capacity tends to be reduced due to desiccant bed saturation. This can have negative influence on the production process.

These factors therefore generate uncertainties in the dew point measure at low DP values (1 ÷ 40 ppm $H_2O$ indicatively) and difficulties in the dehumidification process management with possible qualitative problems and defects on the finished product.

As previously described, the process fluid DP is a fundamental parameter in the dehumidification process, but it is otherwise a not easily measurable parameter because it lies in the border line of the actual dew point sensors measuring envelope.

Purpose of the invention therefore, is making the process flow DP measure more reliable and precise, especially at low $H_2O$ % (1 ÷ 40 ppm $H_2O$ indicatively).

Particularly, purpose of the invention object of this patent application is to allow a more reliable DP measure modifying the conditions of the sample flow Qm.

Particularly, purpose of the invention object of this patent application is to produce a system that increases the $H_2O$ concentration into the sample flow Qm, increasing the sample flow pressure Pm, preferably but not exclusively, from 0,9 < Pm < 1,3 bar to 0,9 < Pm < 50 bar. For a simpler description of the invention, it's considered here a constant temperature condition, nothing changing if the temperature is modified along the measure process.

As known, according to the Boyle-Mariotte law, at constant temperature, the gas pressure is inversely proportional to its volume or, in other words, the product of gas volume per gas pressure is constant. This thermodynamic law is expressed in the following equation : **PV = K**

As per the ideal gas equation of state, the constant K increases its value with absolute temperature, the nature of the gas and number of gas moles following the equation : **PV = nRT = K**

The Boyle - Mariotte law can be therefore be written as follow :

$$\Delta(PV)_{\text{T constant}} = 0$$

or

$$(P_1 V_1 - P_0 V_0)_{\text{T constant}} = 0$$

or, at constant temperature :

$$P_0 V_0 = P_1 V_1$$

and

$$V_1 = P_0 V_0 / P_1$$

Increasing the pressure from the value $P_0$ to the value $P_1$ means a reduction of the volume $\mathbf{V_0}$ to the volume $\mathbf{V_1}$ being constant the gas moles n contained.

Therefore in the new condition (1) it's increased the density and concentration of gases n contained in the volume.

Similarly, at constant pressure, also in systems with outflow, increasing the pressure from the value $P_0$ to $P_1$ implies :

- the volume $V^{\bullet}_0$ is reduced to $V^{\bullet}_1$ according to the equation :

$$V^{\bullet}_1 = P_0 V^{\bullet}_0 / P_1$$

- the number of gas moles **n** contained in the volume remains unchanged according to the equation :

$$PV = nRT$$

- in the meantime it's increased in the volume **V** the concentration of the gases n.

At constant temperature therefore, increasing the pressure from $P_0$ to $P_1$, increases the concentration of $H_2O$ in the volume $V^{\bullet}_1$ in respect to the starting condition $V^{\bullet}_0$.

The dew point value measured by the DP sensor at the pressure $P_1$, is then transformed in the DP value referred to the starting pressure $P_0$ or referred to another useful pressure Px. Thanks to the proposed dew point measure system, it's then possible reduce if not eliminate the uncertainties existing in the measure technique actually adopted, so increasing process quality and affordability.

In the previous description, to simplify the explanation, reference is made to isothermal conditions assuming to keep the temperature Tm during the measurement process.

If the temperature Tm of the sample flow Qm is changed and possibly reduced to improve the dew point sensor accuracy, the DP value can be anyway calculated considering the specific thermodynamic conditions of the flow Qm.

Brief drawing description

The technical characteristics of the invention, according to the aforesaid aims, is verifiable into the claims' content and their advantages will be further explained in the following detailed description, done referring to the attached Figures that represent one or more embodiment exemplifying but not limiting, where :

- Figure 1 represent a scheme of a generic dehumidifying plant.

- Figure 2 represent a plant scheme of a first invention embodiment;

- Figure 3 represent a plant scheme of a functional variance of the first invention embodiment.

- Figure 4 represent a plant scheme of a functional variance of the first invention embodiment.

- Figure 5 represent a plant scheme of a functional variance of the first invention embodiment.

- Figure 6 represent a plant scheme of a functional variance of the first invention embodiment.

- Figure 7 represent a plant scheme of a functional variance of the first invention embodiment.

Detailed description

The Claims and the description are referred to a process flow for the dehumidification of plastic materials; It's intended that the term "process flow" doesn't refers only to air but includes the use of other fluids suitable for the purpose and that this "process flow" could be used also for other purposes than the dehumidification of plastic materials.

According to a general invention embodiment, the dehumidification plant represented in drawing 1 comprises at least one dry flow generator (1), this generator called dryer, containing specific desiccant beds (5) that has the characteristic to fix the humidity contained in the process flow;

- At least one filter (2)
- At least one cooler (3)
- At least one return point (20)
- At least one withdrawal point (21)

It's specified that the return (20) and withdrawal point (21), could be also placed in other points of the plant (in this example, of the dehumidifying plant) depending on specific practical needs and that the return point (20) could be missing in an open measure circuit configuration (11A).

The standard dehumidification plant typically used in the consolidated technique, includes also,

- At least one hopper (12) containing the plastic material (13)
- At least one heater (7)
- At least one delivery pipe (6)
- At least one return pipe (22)
- At least one blower or pump (4)

Typically, the process flow coming from the dryer (1) flows along the delivery pipe (6) into a heater (7). From the heater (7) the process flow enters the hopper (12) via a generic diffuser in such a way it can flow through the plastic material (13) contained into the hopper. Once reached the hopper outlet (12) the process flow (Q) containing the humidity stripped from the plastic material (13) comes back to the dryer (1) through the return pipe (22).

The process flow is then pumped by the blower (4) into the desiccant bed (5) and again through the delivery pipe (6), heater (7), hopper (12), return pipe (22), until the plastic material (13) finally reaches the humidity and temperature levels required by the transforming machine (14).

Following an essential aspect of the invention, the dehumidification plant includes at least one device (9) measuring the Dew Point of the flow coming from the dryer, that at least one aforesaid object, typically consisting in a probe called Dew Point sensor.

The at least one dew point sensor is generally connected to a measure circuit (8-11/8-11A) where flows a sample flow Qm withdrawn from the process circuit (6) in a withdrawal point (21) and generally returned in the process flow in a return point (20). As previously mentioned, to achieve the best working conditions, the process flow coming from the dryer (1) must guarantee a specific Dew Point, generally < -30°C.

As highlighted in *Table 3,* at ambient pressure (1 bar), with a DP equal for example at -70°C, the Dew Point sensor must detect in the fluid about 2.6 ppm of $H_2O$.

As previously commented, the dew point sensor resolution con be improved increasing the $H_2O$ concentration and so, as per Boyle-Marriotte equation, increasing the pressure. It will be possible indicatively but not exclusively operate at constant temperature.

In *Table 4* is reported an example, for simplicity at constant temperature, with correlation between Dew Point and Pressure.

*Table 4*

| P | DP (°C) |
|---|---|
| $P_0$=1 bar | - 63.8 °C |
| $P_X$=2 bar | - 58.7 °C |
| $P_X$=3 bar | - 55.7 °C |
| $P_X$=4 bar | - 53.4 °C |
| $P_X$=5 bar | - 51.7 °C |
| $P_X$=10 bar | - 46.0 °C |
| $P_1$=20 bar | - 40.0 °C |

In *Table 5* is reported an example with the correlations between Water content in ppm and Dew Point in °C when changing the pressure from 1 bar to 50 bar.

*Table 5*

| P (bar) | ppm $H_2O$ | DP (°C) |
|---|---|---|
| $P_0$=1 | 2.6 | -70 °C |
| $P_1$=10 | 26 | -53.3 °C |
| $P_2$=20 | 52 | -47.7 °C |
| $P_3$=30 | 78 | -44.3 °C |

(continued)

| P (bar) | ppm H$_2$O | DP (°C) |
|---------|-----------|---------|
| P$_4$=40 | 104 | -41.8 °C |
| P$_5$=50 | 130 | -39.9 °C |

If, for example at constant temperature, the pressure of a flow with DP=-70°C (2.6 ppm H$_2$O) is increased from P$_0$=1 bar to P$_1$=10 bar, the dew point sensor (9) detects a water density 10 times greater of about 26 ppm and so the measure is much more affordable. If the flow temperature is changed, and possibly reduced, the DewPoint value at the starting conditions could be anyway calculated starting from the thermodynamic conditions of the sample flow.

The DP value measured at the pressure P$_1$ can therefore be recalculated recalculated referring it to the pressure P$_0$ or to another pressure P$_x$ of interest.

Purpose of the invention object of this patent application is therefore to make a compression and measure process that, for processes with a high value of flow Q, involves exclusively a sample circuit. In this case in fact, the energetic loss connected to the measure process is extremely low.

If, on the other hand, you operate on process with limited flow values, the process flow Q can be used for the measurement in the condition: Q = Q$_m$

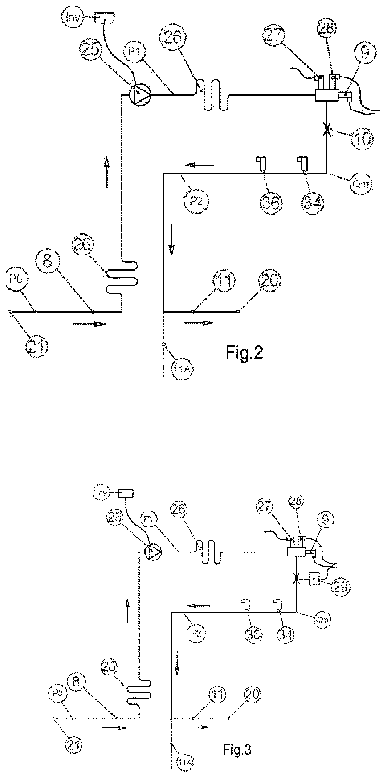

In a first embodiment (Figure 2), in the sampling circuit (8) it's foreseen the use of at least a first heat sink (26), at least one compressor (25) eventually controlled by an inverter, at least one other heat sink (26'), at least one heat sensor (27), at least one high pressure probe (28), at least one dew point sensor (9), at least one low pressure probe (34) and at least one laminating valve (10) that separates the high pressure side of the sampling circuit (8) at pressure P$_1$, from the low pressure side at pressure P$_2$.

In a preferential embodiment (Figure 3) it's possible to foresee at least one modulating valve (29) as an alternative to the at least one fixed laminating valve (10), in such a way to regulate the pressure P$_1$ and the flow Q$_m$ at the selectable value.

The modulating valve (29) can be adjusted for example using the pressure values detected by the pressure sensors (28-34) or from the reading of a flow meter (36).

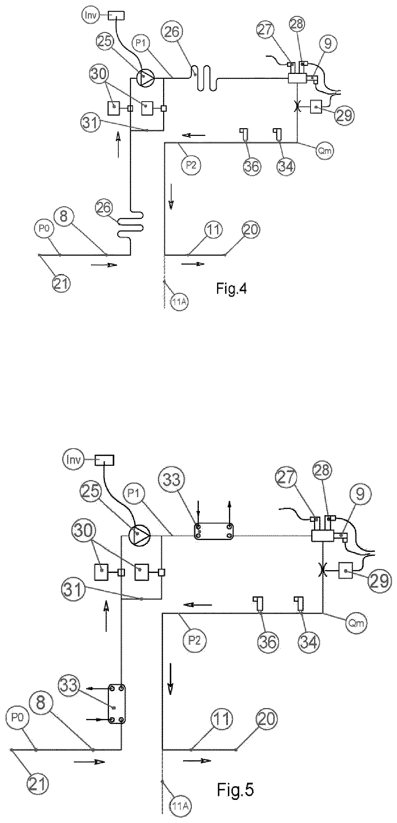

In a further preferential embodiment (Figure 4) it's possible to make a bypass circuit (31) controlled by specific valves (30), to allow the use of the measure system even with the compressor (25) bypassed or switched off.

In a further preferential embodiment (Figure 5) it's possible to foresee at least one gas/liquid heat exchanger (33-33') in place of the heat sink (26-26') to achieve lower and safer working temperatures.

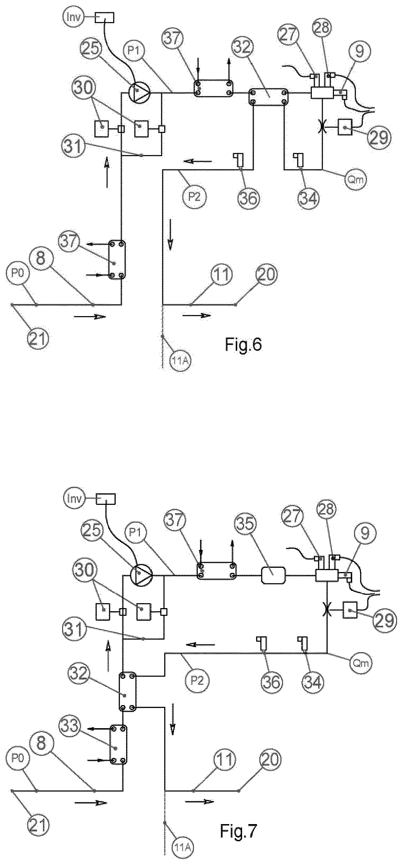

In a further preferential embodiment (Figure 6) it's represented a configuration of the invention which foresees at least one gas/gas heat exchanger (32) which uses the flow (Qm) expansion from pressure (P$_1$) to pressure (P$_2$) to precool the same flow (Qm) entering the dew point sensor (9).

As reported in the embodiment represented in (Figure 6), it's considered the use of at least one evaporator (37) to cool down the flow (Qm) entering the dewpoint sensor (9).

In (Figure 7) it's reported an embodiment with an alternative solution that foresees a thermoelectric device (35) to cool down the flow entering the dewpoint sensor (9).

Referring to the attached Figures, with the purpose to guarantee to the dewpoint sensor (9) a constant optimal flow Qm, it's necessary to regulate the same flow (Qm) on the basis of the pressures (P$_0$) and (P$_2$).

For this reason, the proposed system foresees the possibility to regulate the flow (Qm) with a modulating valve (29, figure 3→7) for example on the basis of the pressure (P$_1$) or on the basis of a flow meter reading (36).

This flow regulation system can manage the sample flow (Qm) from Q$_m$=0 up to a value Q$_m$=Q$_{max}$ properly defined, either with compressor (25) working or with compressor (25) bypassed or switched off.

It follows that this active Qm flow management system on the dewpoint sensor (9) even when the operation of the plant with compressor (25) is switched off, the system is able to solve the problem of flow instability Qm found in a typical dehumidification plants, in which the regulation of the laminating valve (10) is fixed.

In the common practice, the sample flow (Qm) is cooled by a heat sink (26 figure 2-3-4). this cooling system, even though very simple, doesn't allow to achieve temperatures below ambient temperature that is, in some cases, about 60°C.

Since in the dehumidification plants it's almost always available cooling water, it's possible to foresee the cooling of the sample flow (Qm) with a gas/liquid heat exchanger (33) (figure 5) or, in absence of cooling liquid, with an evaporator (37) (figure 7).

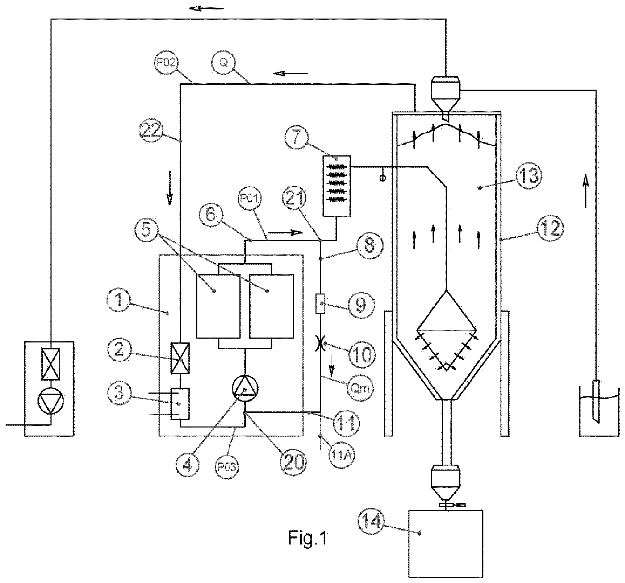

This cooling can be activated also with the compressor (25) switched off, thus obtaining even when conventionally operating at pressure P$_0$ (fig.1) lower and more stable temperatures of the sample flow (Qm) if compared to those achievable with the air cooling (26) typical of the common practice.

Following what previously described, the invention allows to make an autocalibration system for the dew point sensor (9) that works at the pressure $P_0$, to compensate for ageing.

In fact, starting periodically the compressor (25), the pressure of the sample flow (Qm) is increased from the value $P_0$ to the value $P_1$, the D.P. is measured at the pressure $P_1$ and the equivalent Dew Point referred to the pressure $P_0$ is calculated using the correlation tables (table 4).

This method thus allows to compare the direct D.P. measure done at pressure $P_0$ with the indirect D.P. measure done at the pressure $P_1$ (table 4), periodically correcting any deviation of the direct measure done at pressure $P_0$ by the dew point sensor (9).

It's specified that the correlation between the direct/indirect dew point values can be done also with non isothermal transformations, using the specific calculation formulas.

**Claims**

1. Dehumidification plant for bulk material such as plastic materials comprising:

   - at least one dry flow generator (1) of a process flow;
   - at least one pump or blower (4) for pumping the process flow;
   - at least one hopper (12);
   - at least one delivery pipe (6) of the flow from said at least one generator (1) to at least one hopper (12);
   - at least one return pipe (22) of the flow from said at least one hopper (12) to said generator (1):
   - a Dew point measure system,

   **characterized in that**
   said measure system comprises

   - at least one measure circuit (8-11/8-11A) in turn comprising:
   - a withdrawal point (21) of a sample flow (Qm) from said delivery pipe (6) upstream of said hopper (12)
   - at least one compressor (25) for the compression of said sample flow (Qm);
   - at least one temperature sensor (27) of said compressed sample flow (Qm);
   - at least one high pressure sensor (28) of said compressed sample flow (Qm);
   - at least one Dew Point sensor (9) for measuring the dew point of said compressed sample flow (Qm).

   and wherein the dew point value of said compressed sample flow (Qm) measured by the DP sensor (9) at the pressure $P_1$ and the temperature (T1) is then transformed in the DP value referred to a pressure Px, that can be the starting pressure $P_0$ of the process flow or another useful pressure Px.

2. Dehumidification plant as in claim 1 **characterized in that** said at least one measure circuit (8-11/8-11A) also comprises a low pressure sensor (34) of sample flow (Qm) downstream said Dew point sensor (9), and at least one lamination valve (10) or at least one modulating valve (29), and wherein said valve (10, 29) separates the measure circuit (8-11/8-11A) in a high pressure side at pressure P1, upstream said valve (10, 29), from a low pressure side at pressure P2, downstream said valve (10, 29).

3. Dehumidification plant as in claim 1 **characterized in that** said Dew point sensor (9) is capacitive polymers based.

4. Dehumidification plant as in claim 1 **characterized in that** said Dew point sensor (9) is metal oxide based.

5. Dehumidification plant as in claim 1 **characterized in that** said measure circuit (8-11/8-11A) is a closed circuit as it also comprises a return point (20) for returning the sample flow (Qm) in the process flow

6. Dehumidification plant as in claim 1 **characterized by** the fact that the measure circuit (8-11/8-11A) adopt at least one heat sink (26).

7. Dehumidification plant as per previous claims **characterized by** the fact that it includes at least one flow meter (36) for adjusting the modulating valve (29).

8. Dehumidification plant as per previous claims **characterized by** the fact that it includes at least one bypass circuit (31) controlled by dedicated valves (30) to allow the use of the measure system even with the compressor (25) bypassed or switched off.

9. Dehumidification plant as per previous claims **characterized by** the fact that it includes at least one gas/liquid heat exchanger (33), to achieve lower and safer working temperatures.

10. Dehumidification plant as per previous claims **characterized by** the fact that it includes at least one gas/gas heat exchanger (32), which uses the sample flow (Qm) expansion from pressure ($P_1$) to pressure ($P_2$) to precool the same flow (Qm) entering the dew point sensor (9).

11. Dehumidification plant as per previous claims **characterized by** the fact that it includes at least one thermoelectric heat exchanger (35), to cool down the flow entering said dewpoint sensor (9).

**Patentansprüche**

1. Entfeuchtungsanlage für Schüttgut, wie z.B. Kunststoffmaterialien, bestehend aus:

- mindestens einem Trockenstromgenerator (1) für einen Prozessstrom;
- mindestens einer Pumpe oder einem Gebläse (4) zum Fördern des Prozessstroms;
- mindestens einem Trichter (12);
- mindestens einer Zuführungsleitung (6) für den Strom von dem besagten mindestens einem Generator (1) zu mindestens einem Trichter (12);
- mindestens einer Rücklaufleitung (22) für den Strom von dem besagten mindestens einem Trichter (12) zu dem besagten Generator (1):
- einem System zur Taupunktmessung,

**dadurch gekennzeichnet, dass**
das besagte Messsystem folgende Elemente umfasst:

- mindestens eine Messschaltung (8-11/8-11A), die ihrerseits umfasst:
- eine Entnahmestelle (21) eines Prüf-Stroms (Qm) aus der besagten Zuführungsleitung (6) stromaufwärts des besagten Trichters (12)
- mindestens ein Kompressor (25) für die Verdichtung des besagten Prüf-Stroms (Qm);
- mindestens einen Temperatur-Sensor (27) des besagten verdichteten Prüf-Stroms (Qm);
- mindestens einen Hochdruck-Sensor (28) des besagten verdichteten Prüf-Stroms (Qm);
- mindestens einen Taupunktsensor (9) zur Messung des Taupunkts des besagten verdichteten Prüf-Stroms (Qm),

und wobei der vom Taupunktsensor (9) bei dem Druck $P_1$ und der Temperatur (T1) gemessene Taupunktwert des besagten verdichteten Prüf-Stroms (Qm) dann in den Taupunktwert umgewandelt wird, der auf einen Druck Px bezogen ist, welcher der Ausgangsdruck $P_0$ des Prozessstroms oder ein anderer nützlicher Druck Px sein kann.

2. Entfeuchtungsanlage nach Patentanspruch 1, **dadurch gekennzeichnet, dass** die besagte mindestens eine Messschaltung (8-11/8-11A) auch einen Niederdrucksensor (34) für den Prüf-Strom (Qm) stromabwärts des besagten Taupunktsensors (9) und mindestens ein Laminierventil (10) oder mindestens ein Modulationsventil (29) umfasst, und wobei das besagte Ventil (10, 29) die Messschaltung (8-11/8-11A) in eine Hochdruckseite mit Druck P1 stromaufwärts des besagten Ventils (10, 29) und eine Niederdruckseite mit Druck P2 stromabwärts des besagten Ventils (10, 29) trennt.

3. Entfeuchtungsanlage nach Patentanspruch 1, **dadurch gekennzeichnet, dass** der besagte Taupunktsensor (9) auf kapazitiven Polymeren basiert.

4. Entfeuchtungsanlage nach Patentanspruch 1, **dadurch gekennzeichnet, dass** der besagte Taupunktsensor (9) auf Metalloxid basiert.

5. Entfeuchtungsanlage nach Patentanspruch 1, **dadurch gekennzeichnet, dass** die besagte Messschaltung (8-11/8-1 1A) ein geschlossener Kreislauf ist, da sie auch einen Rücklaufpunkt (20) zur Rückführung des Prüft-Stroms (Qm) in den Prozessstrom umfasst.

**6.** Entfeuchtungsanlage nach Patentanspruch 1, **dadurch gekennzeichnet, dass** die Messschaltung (8-11/8-11A) mindestens einen Kühlkörper (26) aufweist.

**7.** Entfeuchtungsanlage nach den vorhergehenden Patentansprüchen, **dadurch gekennzeichnet, dass** sie mindestens einen Durchflussmesser (36) zum Einstellen des Modulationsventils (29) aufweist.

**8.** Entfeuchtungsanlage nach den vorhergehenden Patentansprüchen, **dadurch gekennzeichnet, dass** sie mindestens einen Bypass-Kreislauf (31) umfasst, der durch spezielle Ventile (30) gesteuert wird, um die Verwendung des Messsystems auch bei umgangenem oder ausgeschaltetem Kompressor (25) zu ermöglichen.

**9.** Entfeuchtungsanlage nach den vorhergehenden Patentansprüchen, **dadurch gekennzeichnet, dass** sie mindestens einen Gas/Flüssigkeit-Wärmeübertrager (33) umfasst, um niedrigere und sicherere Arbeitstemperaturen zu erreichen.

**10.** Entfeuchtungsanlage nach den vorhergehenden Patentansprüchen, **dadurch gekennzeichnet, dass** sie mindestens einen Gas/Gas-Wärmeübertrager (32) umfasst, der die Expansion des Prüft-Stroms ($Q_m$) von Druck ($P_1$) auf Druck ($P_2$) nutzt, um denselben Strom ($Q_m$), der in den Taupunktsensor (9) eintritt, vorzukühlen.

**11.** Entfeuchtungsanlage nach den vorhergehenden Patentansprüchen, **dadurch gekennzeichnet, dass** sie mindestens einen thermoelektrischen Wärmeübertrager (35) umfasst, um den in den besagten Taupunktsensor (9) eintretenden Strom abzukühlen.

## Revendications

**1.** Installation de déshumidification pour matériau en vrac comme par exemple matières plastiques comprenant :

- au moins un générateur de débit sec (1) d'un flux de processus ;
- au moins une pompe ou souffleur (4) pour pomper le flux de processus ;
- au moins une trémie (12) ;
- au moins un tuyau de refoulement (6) du flux dudit au moins un générateur (1) à au moins une trémie (12) ;
- au moins un tuyau de retour (22) du flux de ladite au moins une trémie (12) audit générateur (1) :
- un système de mesure du point de rosée,

**caractérisée en ce que**
ledit système de mesure comprend

- au moins un circuit de mesure (8-11/8-11A) comprenant à son tour :
- un point de prélèvement (21) d'un flux échantillon ($Q_m$) dudit tuyau de refoulement (6) en amont de ladite trémie (12) ;
- au moins un compresseur (25) pour la compression dudit flux échantillon ($Q_m$) ;
- au moins un capteur de température (27) dudit flux échantillon comprimé ($Q_m$) ;
- au moins un capteur de haute pression (28) dudit flux échantillon comprimé ($Q_m$) ;
- au moins un capteur du point de rosée (9) pour mesurer le point de rosée dudit flux échantillon comprimé ($Q_m$)

et où la valeur du point de rosée dudit flux échantillon comprimé ($Q_m$) mesuré par le capteur du point de rosée (9) à la pression $P_1$ et la température (T1) est transformé ensuite en la valeur du point de rosée référée à une pression Px, qui peut être la pression de départ $P_0$ du flux de processus ou une autre pression utile Px.

**2.** Installation de déshumidification selon la revendication 1, **caractérisée en ce que** ledit au moins un circuit de mesure (8-11/8-11A) comprend également un capteur de basse pression (34) du flux échantillon ($Q_m$) en aval dudit capteur du point de rosée (9), et au moins une vanne de laminage (10) ou au moins une vanne modulante (29), et où ladite vanne (10, 29) sépare le circuit de mesure (8-11/8-11 A) en un côté de haute pression à la pression P1, en amont de ladite vanne (10, 29), d'un côté de basse pression à la pression P2, en aval de ladite vanne (10, 29).

**3.** Installation de déshumidification selon la revendication 1, **caractérisée en ce que** ledit capteur du point de rosée (9) est à base de polymères capacitifs.

**4.** Installation de déshumidification selon la revendication 1, **caractérisée en ce que** ledit capteur du point de rosée (9) est à base d'oxyde métallique.

**5.** Installation de déshumidification selon la revendication 1, **caractérisée en ce que** ledit circuit de mesure (8-11/8-11A) est un circuit fermé et il comprend également un point de retour (20) pour faire revenir le flux échantillon (Qm) dans le flux de processus.

**6.** Installation de déshumidification selon la revendication 1, **caractérisée en ce que** le circuit de mesure (8-11/8-11A) adopte au moins un dissipateur (26).

**7.** Installation de déshumidification selon l'une quelconque des revendications précédentes, **caractérisée en ce qu'**elle comprend au moins un débitmètre (36) pour le réglage de la vanne modulante (29).

**8.** Installation de déshumidification selon l'une quelconque des revendications précédentes, **caractérisée en ce qu'**elle comprend au moins un circuit de bypass (31) commandé par des vannes dédiées (30) pour consentir l'utilisation du système de mesure même avec le compresseur (25) contourné ou éteint.

**9.** Installation de déshumidification selon l'une quelconque des revendications précédentes, **caractérisée en ce qu'**elle comprend au moins un échangeur de chaleur gaz/liquide (33), pour atteindre des températures de fonctionnement plus basses et sûres.

**10.** Installation de déshumidification selon l'une quelconque des revendications précédentes, **caractérisée en ce qu'**elle comprend au moins un échangeur de chaleur gaz/gaz (32), qui utilise l'expansion du flux échantillon (Qm) de la pression ($P_1$) à la pression ($P_2$) pour prérefroidir le même flux (Qm) qui entre dans le capteur du point de rosée (9).

**11.** Installation de déshumidification selon l'une quelconque des revendications précédentes, **caractérisée en ce qu'**elle comprend au moins un échangeur de chaleur thermoélectrique (35), pour refroidir le flux qui entre dans ledit capteur du point de rosée (9).

Fig.1

Fig.2

Fig.3

Fig.4

Fig.5

Fig.6

Fig.7

**EP 3 594 771 B1**

## REFERENCES CITED IN THE DESCRIPTION

### Patent documents cited in the description

- US 5896675 A

- CN 203745404 U